# EUROPEAN PATENT APPLICATION

(11) **EP 3 367 328 A1**
(43) Date of publication of application: **29.08.2018**
(21) Application number: 18155920.4
(22) Date of filing: 09.02.2018
(51) Int. Cl.: G06T 3/40

(54) **A METHOD, APPARATUS AND COMPUTER PROGRAM PRODUCT FOR GENERATING COMPOSITE IMAGES WITH THREE-DIMENSIONAL EFFECTS AND REDUCING POLE CONTRACTION LINES**

(30) Priority: 23.02.2017 US 201715440011
(71) Applicant: Nokia Technologies Oy, 02610 Espoo (FI)
(72) Inventor: SUN, Yajie, Palo Alto, CA California 94306 (US); NIEMELÄ, Marko Antero, 33250 Tampere (FI); BALASUBRAMANIAN, Prasad, Fremont, CA California 94539 (US)
(74) Representative: Nokia EPO representatives

(57) **Abstract**

A method, apparatus and computer program product are provided for improved generation of composite images for display in three-dimensional environments. Images may be adjoined to form three-dimensional composite images, but the composite images may be subject to contraction lines. The adjoining images or composite image may be processed with circular matching and mixed blending to reduce the contraction lines near the seams of the images and to improve image quality. The circular matching includes adjusting pixel colors and/or intensity values so that pixels corresponding by circular symmetry match in color and/or intensity. The composite image may be smoothed by mixed blending to eliminate or reduce abrupt edges in the area of the circular matching. The resulting composite image provides improved image quality and realistic three-dimensional effects.

## Description

### TECHNOLOGICAL FIELD

An example embodiment of the present invention relates generally to graphics and user interfaces, and more particularly, to a method, apparatus and computer program product for improved generation of composite images for display in three-dimensional environments.

### BACKGROUND

Virtual reality displays, including heard worn devices are becoming increasingly popular. Images may be stitched together to form wide-view panoramic images for display by virtual reality systems and head worn devices. Stereoscopic techniques may be applied to images to create the effect of a viewer being immersed in the setting captured by the images, and to create a three-dimensional (3D) effect for the viewer. 360° images may be generated by combining images and applying visual effects. While viewing such 360° images with a virtual reality display, a viewer can turn his head to different areas of an environment or setting captured by a 360° image.

Imagery of a setting captured from various viewpoints or cameras, including multiple cameras housed in the same device, may be stitched together or adjoined so as to create a 360° image or panoramic image with virtual reality or 3D effects. However, adjoining multiple images to create a composite image for display with three-dimensional effects may result in discontinuity between the adjoined images and degradation in image quality.

### BRIEF SUMMARY

A method, apparatus, and computer program product are therefore provided for improved generation of composite images for display in 3D environments. Example embodiments perform circular matching and mixed blending in an iterative process to create smoother transitions between adjoined images of a composite 360° image in the top and bottom poles.

An apparatus is provided according to certain example embodiments. The apparatus comprises at least one processor and at least one memory including computer program code, the at least one memory and the computer program code configured to, with the processor, cause the apparatus to at least receive an indication of at least a first and second image for adjoining to form a composite image for display with 3D effects.

In certain embodiments, the at least one memory and the computer program code are further configured to perform circular matching on the first and second image (e.g., an initially stitched panorama or composite image), wherein the circular matching comprises (a) determining a first pixel of the first (e.g.,. left half) image corresponding by a circular symmetric angle to a second pixel of the second (e.g., right half) image and (b) adjusting a color and/or intensity of at least one of the first or second pixel such that the colors or intensities (e.g., intensity values) of the first and second pixels match.

According to example embodiments, the at least one memory and the computer program code are further configured to perform mixed blending on at least a portion of the composite image identified based on the circular matched portion of the composite image. That portion of the composite image is next to the circular matched portion so that edges/separation could be filtered out by using mixed blending.

According to certain example embodiments, the at least one memory and the computer program code may be further configured to cause the apparatus to at least: perform circular matching and mixed blending on the second image and a third image by determining an additional set of pixels and adjusting the color and/or intensity of the additional set of pixels; and refine the composite image by repeating the circular matching and the mixed blending on the first, second, and third images.

A computer program product is also provided. The computer program product comprises at least one non-transitory computer-readable storage medium having computer-executable program code instructions stored therein, the computer-executable program code instructions comprising program code instructions to receive an indication of at least a first and second image for adjoining to form a composite image for display with three-dimensional effects. The computer-executable program code instructions further comprise program code instructions to perform circular matching on the first and second (e.g., ring camera stitched panorama and/or composite image), wherein the circular matching comprises (a) determining a first pixel of the first image (e.g., left side of composite image) corresponding by a circular symmetric angle to a second pixel of the second image (e.g., right side of composite image) and (b) adjusting a color and/or intensity of at least one of the first or second pixel such that the colors and/or intensities of the first and second pixels match. The computer-executable program code instructions further comprise program code instructions to perform mixed blending on at least a portion of the composite image identified based on the circular matched portion of the composite image, along with the circular matched portion. The mixed blending removes and/or reduces the edges introduced from the circular matching/fading.

A method is also provided according to embodiments provided herein. The method comprises receiving an indication of at least a first and second image for adjoining to form a composite image for display with three-dimensional effects. The method also includes performing circular matching on the first and second image (e.g.,left image and right image of the composite and/or panorama image), wherein the circular matching comprises (a) determining a first pixel of the first (e.g., left image of the composite image) corresponding by a circular symmetric angle to a second pixel of the second image (e.g., right image of the composite image) and (b) adjusting a color and/or intensity of at least one of the first or second pixel such that the colors and/or intensities of the first and second pixels match. The method also includes performing mixed blending on at least a portion of the composite image and the circular matched portion of the composite image bordered next to each other to remove and/or reduce a perceived edge and/or discontinuity.

In some embodiments, the first and second pixels corresponding by the circular symmetric angle are determined from 360° angles in the composite image. The first and second pixels corresponding by the circular symmetric angle may be determined based on at least a user input. In some embodiments, the first and second pixels corresponding by the circular symmetric angle are determined based on at least a camera attribute. According to some embodiments, the first and second pixels corresponding by the circular symmetric angle are determined based on an automatic analysis of image contents within an initial composite image comprised of at least two separate images. According to some embodiments, the first and second images are captured via a single-housing image capture device.

An apparatus is also provided. The apparatus includes means for receiving an indication of at least a first and second image for adjoining to form a composite image for display with three-dimensional effects. The apparatus also includes means for performing circular matching on the first and second (e.g., left and right images of the composite image), wherein the circular matching comprises (a) determining a first pixel of the first image (e.g. left image of the composite) corresponding by a circular symmetric angle to a second pixel of the second image (e.g., right image of the composite image) and (b) adjusting a color and/or intensity of at least one of the first or second pixel such that the colors and/or intensities of the first and second pixels match. The apparatus also includes means for performing mixed blending on at least a portion of the composite image identified based on the circular matched portion of the composite image to remove or reduce any perceived edges introduced from circular matching.

### BRIEF DESCRIPTION OF THE DRAWINGS

Having thus described certain example embodiments of the present invention in general terms, reference will hereinafter be made to the accompanying drawings which are not necessarily drawn to scale, and wherein:
Figure 1 is a block diagram of an apparatus that may be configured to implement example embodiments of the present disclosure;
Figures 2 and 3 are example cameras according to example embodiments of the present disclosure;
Figure 4 is an example image according to example embodiments of the present disclosure;
Figure 5 is a flowchart illustrating operations performed in accordance with example embodiments of the present disclosure;
Figure 6 illustrates circularly symmetric pixels in accordance with example embodiments of the present disclosure;
Figure 7 is an example image according to example embodiments of the present disclosure;
Figure 8 illustrates variations of an image according to example embodiments of the present disclosure; and
Figure 9 is a flowchart illustrating operations performed in accordance with example embodiments of the present disclosure.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, field programmable gate array, and/or other computing device.

As defined herein, a "computer-readable storage medium," which refers to a physical storage medium (e.g., volatile or non-volatile memory device), may be differentiated from a "computer-readable transmission medium," which refers to an electromagnetic signal.

As described below, a method, apparatus and computer program product are provided for improved generation of composite images for display in 3D environments. In this regard, any reference to an image or images made herein is non-limiting and may include either photographs and/or video imagery. A seam or pole may refer to the adjoining points of two or more images or video image that are combined to form a panoramic image or panoramic video imagery. Any reference herein to a 360° image is non-limiting and may include any imagery having 3D or virtual reality effects. The image may therefore not necessary cover an entire 360° area, but may nevertheless provide 3D effects such that a viewer feels immersed in the setting.

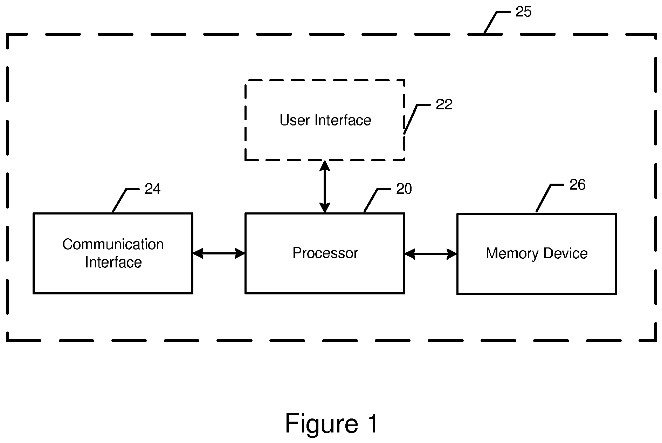

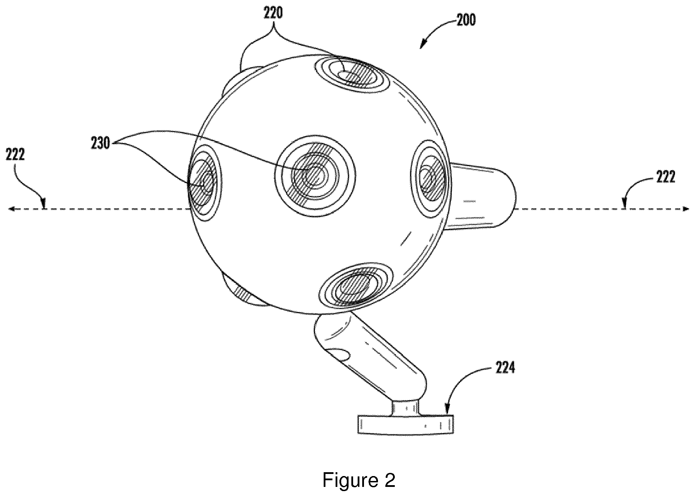

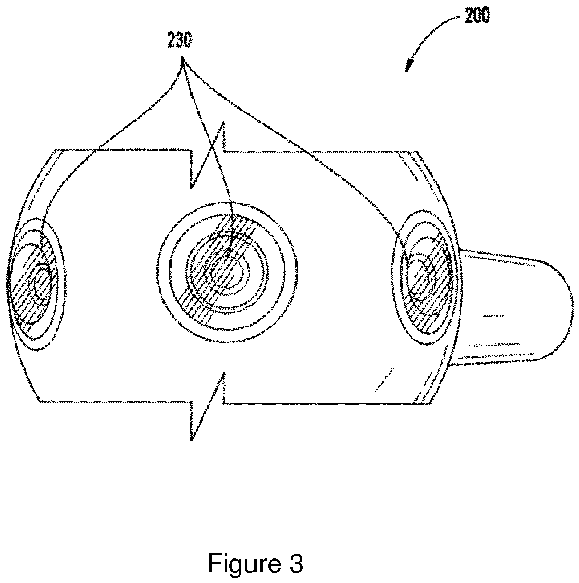

Referring to Figure 1, apparatus 25 may include or otherwise be in communication with a processor 20, communication interface 24, and memory device 26. As described below and as indicated by the dashed lines in Figure 1, in some embodiments, the apparatus 25 may also optionally include a user interface 22. Apparatus 25 may be implemented as a server or distributed system, such as a server for processing images, generating composite images and/or the like. In some example, apparatus 25 need not necessarily be embodied by a server, and may be embodied by a wide variety of devices including personal computers, work stations, or mobile terminals, such as laptop computers, tablet computers, smartphones or any combination of the aforementioned, and other types of voice and text communications systems. In some example, apparatus 25 may be embodied within an image capture device such as a camera, such as those depicted in Figures 2 and 3 and described in further detail below.

In some embodiments, the processor 20 (and/or co-processors or any other processing circuitry assisting or otherwise associated with the processor 20) may be in communication with the memory device 26 via a bus for passing information among components of the apparatus 25. The memory device 26 may include, for example, one or more volatile and/or non-volatile memories. In other words, for example, the memory device 26 may be an electronic storage device (e.g., a computer readable storage medium) comprising gates configured to store data (e.g., bits) that may be retrievable by a machine (e.g., a computing device like the processor 20). The memory device 26 may be configured to store information, data, content, applications, instructions, or the like for enabling the apparatus to carry out various functions in accordance with an example embodiment of the present invention. For example, the memory device 26 could be configured to buffer input data for processing by the processor 20. Additionally or alternatively, the memory device 26 could be configured to store instructions for execution by the processor 20.

The apparatus 25 may, in some embodiments, be embodied in various devices as described above. However, in some embodiments, the apparatus 25 may be embodied as a chip or chip set. In other words, the apparatus 25 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 25 may therefore, in some cases, be configured to implement an embodiment of the present invention on a single chip or as a single "system on a chip." As such, in some cases, a chip or chipset may constitute means for performing one or more operations for providing the functionalities described herein.

The processor 20 may be embodied in a number of different ways. For example, the processor 20 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 20 may include one or more processing cores configured to perform independently. A multi-core processor may enable multiprocessing within a single physical package. Additionally or alternatively, the processor 20 may include one or more processors configured in tandem via the bus to enable independent execution of instructions, pipelining and/or multithreading.

In an example embodiment, the processor 20 may be configured to execute instructions stored in the memory device 26 or otherwise accessible to the processor 20. Alternatively or additionally, the processor 20 may be configured to execute hard coded functionality. As such, whether configured by hardware or software methods, or by a combination thereof, the processor 20 may represent an entity (e.g., physically embodied in circuitry) capable of performing operations according to an embodiment of the present invention while configured accordingly. Thus, for example, when the processor 20 is embodied as an ASIC, FPGA or the like, the processor 20 may be specifically configured hardware for conducting the operations described herein. Alternatively, as another example, when the processor 20 is embodied as an executor of software instructions, the instructions may specifically configure the processor 20 to perform the algorithms and/or operations described herein when the instructions are executed. However, in some cases, the processor 20 may be a processor of a specific device (e.g., a mobile terminal or network entity) configured to employ an embodiment of the present invention by further configuration of the processor 20 by instructions for performing the algorithms and/or operations described herein. The processor 20 may include, among other things, a clock, an arithmetic logic unit (ALU) and logic gates configured to support operation of the processor 20.

Meanwhile, the communication interface 24 may be any means such as a device or circuitry embodied in either hardware or a combination of hardware and software that is configured to receive and/or transmit data from/to a network and/or any other device or module in communication with the apparatus 25. In this regard, the communication interface 24 may include, for example, an antenna (or multiple antennas) and supporting hardware and/or software for enabling communications with a wireless communication network. Additionally or alternatively, the communication interface 24 may include the circuitry for interacting with the antenna(s) to cause transmission of signals via the antenna(s) or to handle receipt of signals received via the antenna(s). In some environments, the communication interface 24 may alternatively or also support wired communication. As such, for example, the communication interface 24 may include a communication modem and/or other hardware/software for supporting communication via cable, digital subscriber line (DSL), universal serial bus (USB) or other mechanisms.

In some embodiments, such as instances in which the apparatus 25 is embodied by a user device, the apparatus 25 may include a user interface 22 that may, in turn, be in communication with the processor 20 to receive an indication of a user input and/or to cause provision of an audible, visual, mechanical or other output to the user. As such, the user interface 22 may include, for example, a keyboard, a mouse, a joystick, a display, a touch screen(s), touch areas, soft keys, a microphone, a speaker, or other input/output mechanisms. Alternatively or additionally, the processor 20 may comprise user interface circuitry configured to control at least some functions of one or more user interface elements such as, for example, a speaker, ringer, microphone, display, and/or the like. The processor 20 and/or user interface circuitry comprising the processor 20 may be configured to control one or more functions of one or more user interface elements through computer program instructions (e.g., software and/or firmware) stored on a memory accessible to the processor 20 (e.g., memory device 26, and/or the like). In some embodiments, the apparatus 25 may include a camera (e.g., camera 200 described below) or other image capturing device, which is configured to capture images, including video images.

Figures 2 and 3 depict example cameras 200 that may be configured to capture the images processed by apparatus 25 according to example embodiments. In some embodiments, such as those in which apparatus 25 is implemented as a server, apparatus 25 may be implemented remotely from any number of cameras 200 and may be configured to communicate with the cameras 200 over a network. In certain example embodiments, apparatus 25 may receive and/or process information relating to any of the cameras 200, such as camera attributes (e.g., positioning, angle, focus, zoom, etc.). In this regard, the camera 200 may be any device that houses a camera and is configured for image capture. The device may include other components, but for simplicity, is referred to herein as simply camera or cameras 200.

Camera 200 may therefore comprise a processor, such as processor 20 and/or a communication interface, such as communication interface 24, which may be configured for communicating with apparatus 25. For example, camera 200 may transmit images or camera attributes associated with images to the apparatus 25. In some examples, camera 200 may include a memory device, such as memory device 26.

Figure 2 depicts an example camera 200, implemented as a virtual reality or 360° camera. One example of such camera is the Nokia OZO® virtual reality camera. The camera 200 may include a spherical housing comprising several cameras, oriented to capture and/or generate 360° images based on the images captured from the multiple cameras.

The camera 200 includes multiple lenses. Lenses 220 are angled substantially upwards. In this regard, the upward angled lenses 200 are configured to capture imagery above an axis 222 that is substantially horizontal (e.g., parallel to or within a threshold angle of parallel to) the ground and/or a base 224 to which the camera 200 is attached. Lenses 230 are angled substantially horizontal to axis 222 and may capture imagery above, below, and in line with the axis 222. In some examples, the multiple lenses such as lenses 220 and 230 may be considered multiple cameras 200 housed within a single device and/or housing.

Figure 3 is provided to demonstrate that in some cameras 200, the upward angled lenses 220 may not be present, or may be disabled. For instance, camera 200 may be configured to operate in a "4-camera mode," in which 4 lenses 230 are configured to perform image capture (only 3 lenses 230 are depicted in Figure 3 due to the drawing being depicted in two-dimension). In this regard, the lenses 230, may indeed capture areas above the camera 200 with a larger Field of View (FOV) equal to or more than 180 degrees, but may do so from different angles than that of lenses 220 of Figure 2.

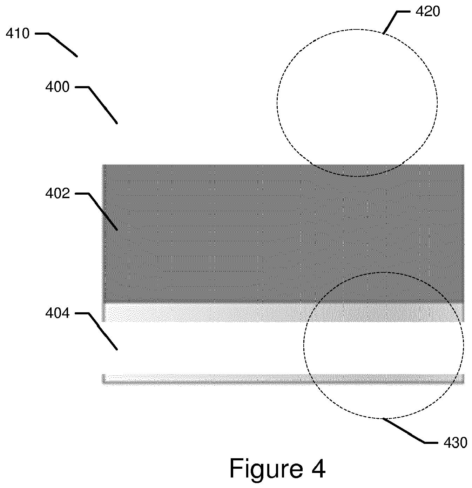

In such examples, and others, 360° composite images may have contraction lines or star patterns near the top and bottom poles, resulting in degradation of image quality. In Figure 4, images 400, 402 and 404 are adjoined to form a composite image 410. The composite image 410 may be provided with 3D effects, but is illustrated in Figure 4 as a two-dimensional image for simplicity. Contraction lines appear as distinct lines near the north pole and south pole because of non-symmetric top and bottom edges of the stitched panorama images. The contraction lines may be caused as a result of forming a composite 360° image by adjoining images that are not necessarily taken from respective angles from which the 360° image is viewed by a user. Additionally or alternatively, the contraction lines may be caused by adjoining images such that the image borders, edges, seams, or poles do not align due to poor camera extrinsic and/or corrupted meta-data files. The composite image 410 lacks mono and circular symmetry on the top and bottom image edges on which the fading into mono top portion of the initial side-camera stitched panorama 400, side-camera stitched panorama image 402 and the fading into mono bottom portion of the panorama 404 are adjoined.

The presence of contraction lines or star patterns, or the extent of the contraction lines or star patterns in a composite image may depend on the camera configuration, positioning of cameras, and/or angles of cameras. This side-effect may be particularly inevitable or common in 4-camera stitching mode, i.e. when images are stitched or combined having been captured from only four side cameras. The presence of contraction lines could be mitigated with a mono top camera and a bottom camera. For example, composite images formed from images captured with the camera configuration of Figure 3 may have more drastic contraction lines than composite images formed with a camera configuration of Figure 2. According to example embodiments provided herein, the composite 360° image may be generated such that contraction lines such as those of Figure 4 may be made less visible, or may be eliminated. The composite images may therefore be of an improved quality.

Figures 2 and 3 are provided as example camera configurations, with Figure 2 including upward angled lenses, and Figure 3 without the upward angled lenses. Figure 4 is provided as an example composite image of images adjoined at the top and bottom, where the images adjoined are captured from a camera 200 of Figure 2 and/or 3. However, it will be appreciated that the example embodiments provided herein may be applied to any camera configuration and/or any means of adjoining images (such as by left and right edges, or any other edges, seams or poles on which two images are adjoined). For example, the seams of the composite image may run in any direction and/or angle. Example embodiments may additionally be utilized with multiple independent cameras 200 situated in a common scene or setting. As another example, a camera 200 may move from one position to another, to capture images from different viewpoints, which may also be combined to form panoramic images.

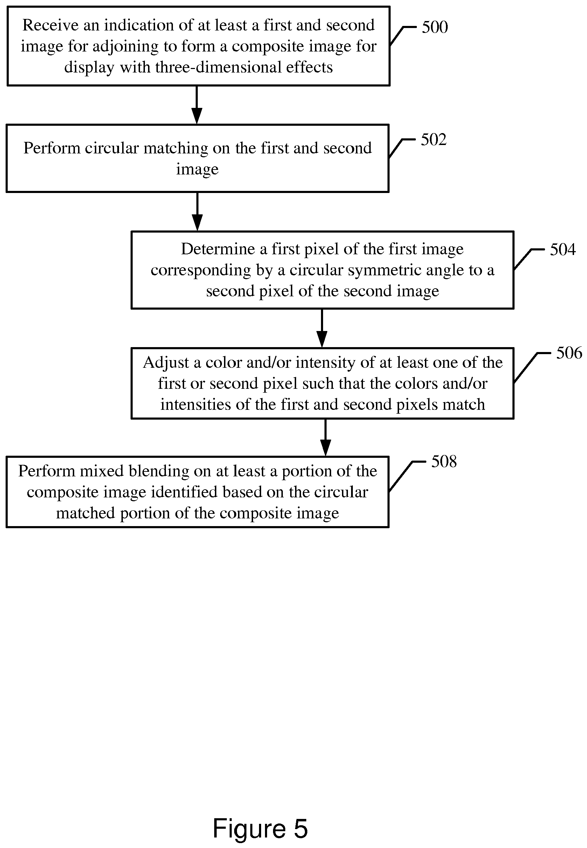

Referring now to Figure 5, operations for improved generation of composite images for display in 3D environments are outlined in accordance with an example embodiment. In this regard and as described below, the operations of Figure 5 may be performed by an apparatus 25.

As shown by operation 500, the apparatus 25 may include means, such as the processor 20, the user interface 22, the communication interface 24, memory device 26 or the like, for receiving an indication of at least a first and second image for adjoining to form a composite image for display with 3D effects. As an example, any two of the images 400, 402, or 404 may be considered images to be adjoin to form a composite image. The images may be captured by camera 200, or may be received via the communication interface 24, for example. As another example, the indications of images may be reference points to the images stored in a database or other storage, such as memory device 26.

It will be appreciated that the first and second images may be already adjoined to form a composite image, or may be separate, and may be configured to be adjoined to form a composite image. In this regard, some of the operations provided herein may be performed on the separate first and/or second images, or on the composite image of the first and second adjoined images.

In operation 502, the apparatus 25 may include means, such as the processor 20, memory device 26, or the like, for performing circular matching on the first and second image. Circular matching may include operations 504 and 506, described below.

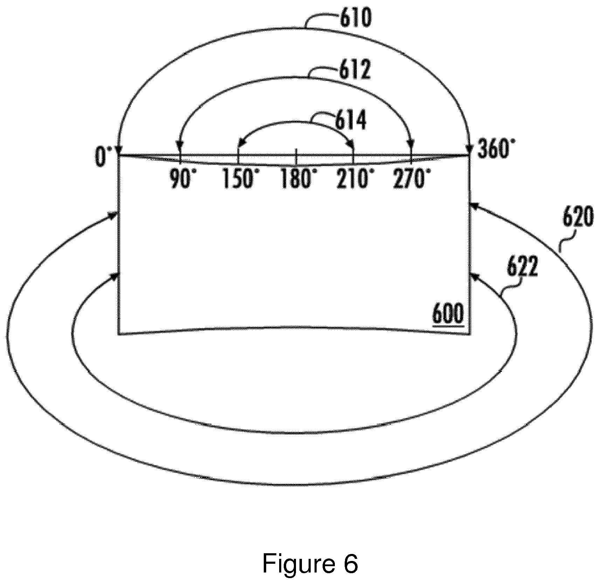

At operation 504, the apparatus 25 may include means, such as the processor 20, memory device 26, or the like, for determining a first pixel of the first image (e.g., first image of composited image) image corresponding by a circular symmetric angle to a second pixel of the second image (e.g., in a circular symmetric position to that of the first pixel). Figure 6 illustrates an example determination of the first and second pixels corresponding by circular symmetric angles. The first and second pixels may be identified based on 360° symmetry between the middle line at 180°.

An example composite image 600 for display in a 360° environment is provided in Figure 6. Corresponding pixels from first and second (or any number of) adjoined images are indicated in Figure 6, where the indicated angles correspond to respective viewing angles within a 360° environment. In this regard, as shown by indicator 610, a pixel appearing on the top edge of a seam at 0° is matched to a pixel appearing on the top edge at 360°. Similarly as indicated by indicators 612 and 614, pixels appearing on the top edge of a seam at 90° and 270°, and 150° and 210° are respectively matched as corresponding pixels or matched pixel pairs. In reality, due to seam overlapping and mixing, left and right discrepancy, and/or bad camera extrinsic, the actual top and bottom edges might not be circularly symmetric if no upward lens were utilized to capture an image included in the composite image. Any number of corresponding pixels may be identified along the seam. As shown by indicators 620 and 622, pixels matched along other seams of a 360° image may be similarly paired as corresponding pixels. For example, the identification of corresponding pixels may be determined in subsequent iterations of operation 504.

At operation 506, apparatus 25 may include means, such as processor 20, memory device 26, or the like, for adjusting a color and/or an intensity (e.g., intensity value, or color channel) of at least one of the first or second pixels such that the colors and/or intensities of the first and second pixels match. An interface parameter could be specified which pixel is a reference and then the other pixel is being adjusted. For simplicity, the system could specifically fix the left side pixel as the reference. In further application, the determination of reference for a certain capture could be determined by automatic image recognition and analysis. One or more pixel colors or intensity values may therefore be adjusted. For example, the red green and blue values (RGB value) of any of the pixels may be adjusted. Said differently, a pixel may be "copied and pasted" to its circularly symmetric corresponding pixel. As another example, the two respective RGB values of the first and second pixels may be averaged to calculate a new RGB value for both pixels. As one more example, a specifically designed digital filter could obtain a filtered value between two pixels and replace two pixels with the generated filtered value.

Example embodiments may improve the mono and circular symmetry of adjoined images by performing circular matching. That is, for the seams to be more disguised or for the contract lines to be less visible, example embodiments may provide circular matching such that pixels from the first image corresponding by a circular symmetric angle to a pixel of the second image are pasted or matched. The edges or seams of adjoined images may therefore contract to one point.

In some examples, any number of pixels may be identified for pasting onto its circularly symmetric corresponding pixel. For example, a predefined number of pixels extending from a seam or pole of adjoined images may be included in the circular matching process described in operations 502, 504 and 506.

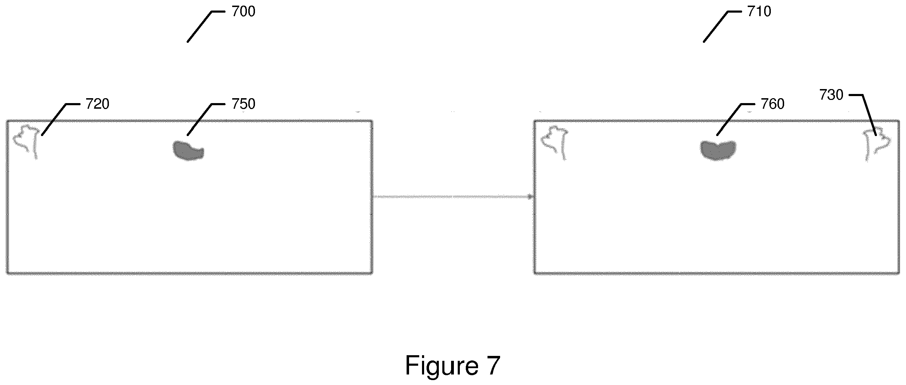

Figure 7 illustrates a composite image 700 before circular matching is performed. Composite image 710 illustrates the composite image after circular matching is performed according to example embodiments. Object 720 in image 700 is reflected as object 730 in image 710 based on the circular matching. Object 750 in image 700 appears as the symmetric object 760 in image 710 near the middle line.

In some examples, the circular matching may create a distinct seam/edge between circular matched portion and neighboring portion without being processed. The edges may appear as a horizontal seam in the composite image. Example embodiments may therefore perform mixed blending to provide for smoother transitions in the area of the pixels to which the circular matching is applied. The mixed blending applies frequency band mixing to remove high frequency seam so that the transition will be seamless and smooth.

In operation 508, apparatus 25 may include means, such as processor 20, memory device 26, or the like, for performing mixed blending on at least a portion of the composite image identified based on the circular matched portion of the composite image. In the areas of the composite image subject to the circular matching of operations 502, 504 and 506, certain pixels, such as those surrounding the circular matched portions, or areas surrounding the circular matched portions (e.g., pixels within a threshold distance of the circularly matched portions) may be blended so as to provide a smoother transition relative to the remainder of the composite image and/or portions of the composite image surrounding the circularly matched portions.

In this regard, the colors or RGB values of pixels associated with abrupt edges (such as those introduced by the circular matching process) may be adjusted, such as by darkening or lighting, or frequency band mixing, to provide for a smoother transition of the rotated or pasted areas into the rest of the scene of the composite image. Example embodiments therefore utilize a mixed blending technique to blend the circular rotated content seamlessly onto the rest of the composite image while still maintaining the circular symmetry on the seams as provided by the circular matching.

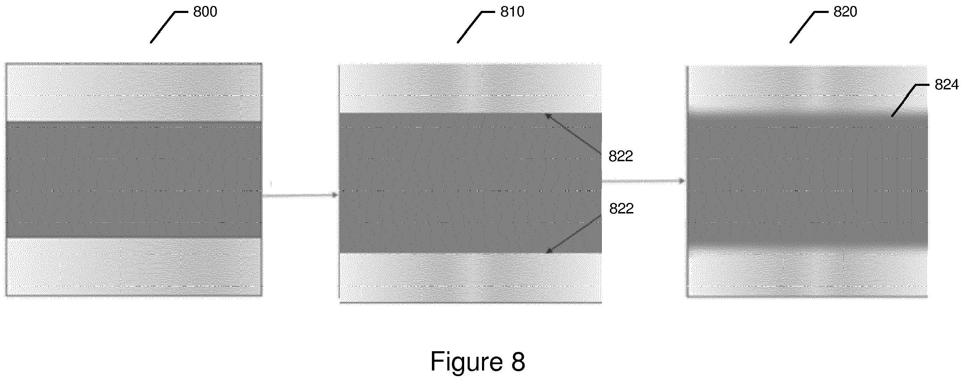

Figure 8 illustrates an original composite image 800, the composite image 810 after circular matching is performed, and the composite image 820 after mixed blending is performed according to example embodiments. Image 810 illustrates that the circular matching is provided by making the image symmetrical over the seams. However, image 810 also includes an abrupt edge, or seam 822. As illustrated in image 820, the apparatus 25 performs mixed blending and provides for a smoother edge 824 that gradually fades or transitions into the surrounding portions of the composite image 820.

According to example embodiments, the process of the circular matching and mixed blending may be together referred to as circular fading. The end result is a composite image displayed in a 360° environment that is more aesthetically pleasing without a contract line or star pattern near north and south poles than a composite image in which circular fading is not applied.

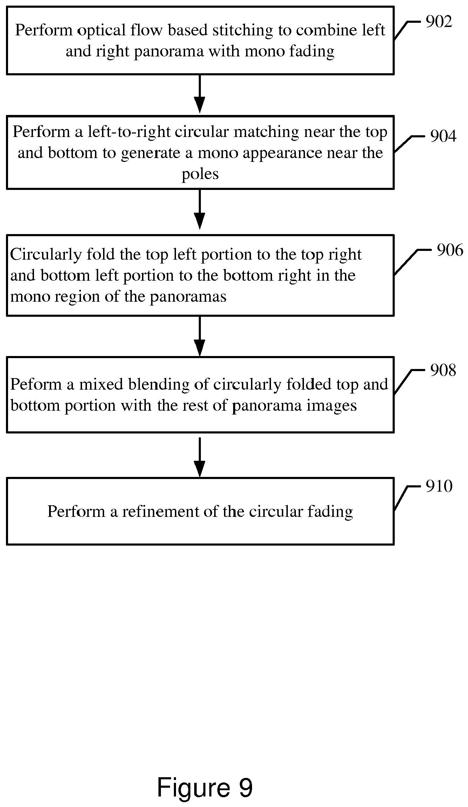

As another example, Figure 9 illustrates operations according to certain example embodiments. In operation 902, the apparatus 25 may include means, such as processor 20, memory device 26, or the like, for performing optical flow based stitching to combine left and panorama images. Optical flow is a method of estimating motion and discrete pixel movement and/or displacement for finding corresponding pixels between adjoined images for seamless stitching. Optical flow stitching utilizes warping from estimated motion displacement to have a seamless composite image. It can applied to initial side camera stitching as well as top and bottom cameras.

In operation 904, the apparatus 25 may include means, such as processor 20, memory device 26, or the like, for performing a left-to-right circular matching near the top and bottom to generate a monoscopic appearance near the top and bottom edges. In operation 906, the apparatus 25 may include means, such as processor 20, memory device 26, or the like, for circularly folding the top left portion to the top right and bottom left portion to the bottom right in the mono region of the panoramas. In operation 908, the apparatus 25 may include means, such as processor 20, memory device 26, or the like, for performing a mixed blending of circularly folded top and bottom portion with the rest of panorama images. In this regard, example embodiments may provide a composite image that appears without a contract line or star pattern near the poles, or in which the seam is less apparent than in example in which circular fading are not utilized.

In operation 910, the apparatus 25 may include means, such as processor 20, memory device 26, or the like, for performing refinement of the circular fading. In this regard, any of the operations of Figure 5 and 9 may be repeated. The circular matching and mixed blending may be repeated, for example, for each image that is adjoined. As another example, the circular matching and mixed blending may be repeated a fixed or predetermined number of times. In some examples, the circular matching and mixed blending may be repeated until a user indicates via a user interface, for the circular fading cycles to stop (e.g., when the user indicates the desired image quality of a displayed composite image is achieved). As yet another example, apparatus 25 may calculate the image quality by processing the pixels and determining the variation in coloration throughout the image. Example embodiments may therefore calculate a measurable quality and repeat the circular fading cycles until a predefined image quality is obtained.

In this regard, the apparatus 25 may determine the portions of the images to be circular faded, and/or the first and second pixels to be circularly matched, in any number of ways. As one example, the first and second pixels corresponding by the circular symmetric angle are determined from 360° angles in the composite image and occurring on a seam or pole of the composite image. Example embodiments may then extend from those points away from the seam or pole, such as a predefined number of pixels, and perform the circular matching accordingly. The mixed blending may be performed with each iteration of the circular matching, or as another example, several iterations of circular matching may occur, followed by the mixed blending, and/or any combination of repeated circular matching and blending cycles.

According to some embodiments, the first and second pixels corresponding by the circular symmetric angle may be determined based on at least a user input. The user input may include parameters, including those indicating the positions of seams and/or poles within a composite image, and/or an extent of an area surrounding the seam or pole. For example, a user may select a seam in a composite image for processing according to example embodiments, and the circular fading processes may be performed on the area as described herein.

As another example, the first and second pixels corresponding by the circular symmetric angle may be determined based on at least a camera attribute. For example, the first and second pixels may be determined based on camera or lens attributes associated with the camera or lens that captured the respective images. The camera attributes may include any properties or characteristics of camera(s) 200, such as those affecting an image to be captured from any of the cameras. For example, the camera attributes may include position and/or angle. In this regard, the camera attribute may apply to the physical device embodying the camera, or the lens within the camera. Example camera attributes may further include focus, zoom, and/or the like. In some examples the camera attributes may be detected from settings of the camera 200, or may be detected by various sensors on the camera 200.

The seams or poles may include any number of pixels of the subject image, and may be linear, jagged, straight, and/or curved. The seam may be determined, estimated or calculated according to any number of the camera attributes. For example, based on the positioning or angle of a camera or cameras 200, the location of the seam relative to the subject image or relative to the camera 200 may be determined. The seam may be determined to be an overlapping area of the images. In some embodiments, such as when cameras 200 are embodied by a 360° imaging device, the seam may be determined based on the position of the device as the position of the cameras may be fixed or predefined within the device. In some examples, multiple seams may be determined. For example, apparatus 25 may determine as many seams as necessary to provide the full 360° imaging, based on the number of and/or angle of all the cameras.

In some instances, the seam may be based on the border, boundary or edge of the image determined based on a camera attribute. Any attribute of the camera 200 may be utilized in determining the seam. For example, the zoom level of a camera may affect the portion of the scene captured in the image, and therefore the location of the seam in the subject image. The angle of the camera 200 or a lens may further impact the portion of the scene captured in the image, and therefore the pixels and/or areas that may undergo circular fading according to example embodiments. In some examples, the positon of the camera 200 in combination with the zoom properties of the camera 200 may be used to determine the areas and/or pixels on which the circular fading is performed.

As another example, the first and second pixels, seams, and/or areas on which to perform circular fading, may be determined based on an analysis of a composite image by the computer program code and/or apparatus 25. For example, a composite image may be provided that has already been generated from one or more adjoined images. Example embodiments may process the composite image to determine positions of seams, and/or positions of pixels to which the circular fading techniques will be applied according to example embodiments provide herein.

As mentioned above, any number of iterations of circular matching and mixed blending may be performed, and on any areas of a composite image to refine and improve the image quality. Example embodiments therefore transform images to generated refined composite images for storage on memory device 26, and/or for display in 360° environments. The functionality of a virtual reality display may therefore be improved according to example embodiment. And, example embodiments provide for the conservation of power and processing resources otherwise expended based on a viewer's adjustment of a viewing angle to view areas of a 360° image that are otherwise blurry or unclear. For example, while using a head worn device that do not employ example embodiments, a viewer may have to adjust the viewer's head position more frequently to shift an image portion (e.g., area of interest) that falls on a blurry contraction line to an area of the display that provides the image more clearly, such as in front of the user. Example embodiments therefore provide technical advantages and improvements over other implementations of displays utilizing 3D effects.

As described above, Figures 5 and 9 illustrate flowcharts of an apparatus 25, method, and computer program product according to example embodiments of the invention. It will be understood that each block of the flowchart, and combinations of blocks in the flowchart, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by a memory device 26 of an apparatus 25 employing an embodiment of the present invention and executed by a processor 20 of the apparatus 25. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture, the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, may be implemented by special purpose hardware-based computer systems which perform the specified functions, or combinations of special purpose hardware and computer instructions.

In some embodiments, certain ones of the operations above may be modified or further amplified. Furthermore, in some embodiments, additional optional operations may be included. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising:
means for receiving an indication of at least a first and second image for adjoining to form a composite image for display with three-dimensional effects;
means for performing circular matching on the first and second image, wherein the circular matching comprises (a) determining a first pixel of the first image corresponding by a circular symmetric angle to a second pixel of the second image and (b) adjusting at least one of a color or intensity of at least one of the first or second pixel such that at least one of the colors or the intensities of the first and second pixels match; and
means for performing mixed blending on at least a portion of the composite image identified based on the circular matched portion of the composite image.

2. The apparatus according to claim 1, wherein the first and second pixels corresponding by the circular symmetric angle are determined from 360°angles in the composite image.

3. The apparatus according to claim 1 or 2, wherein the first and second pixels corresponding by the circular symmetric angle are determined based on at least a user input.

4. The apparatus according to any of claims 1 to 3, wherein the first and second pixels corresponding by the circular symmetric angle are determined based on at least a camera attribute.

5. The apparatus according to any of claims 1 to 4, wherein the first and second pixels corresponding by the circular symmetric angle are determined based on an analysis of the at least two images.

6. The apparatus according to any of claims 1 to 5, further comprising:
means for performing circular matching and mixed blending on the second image and a third image by determining an additional set of pixels and adjusting at least one of the color or intensity of the additional set of pixels; and
means for refining the composite image by repeating the circular matching and the mixed blending on the first, second, and third images.

7. The apparatus according to any of claims 1 to 6, wherein the first and second images are captured via a single-housing image capture device.

8. A method comprising:
receiving an indication of at least a first and second image for adjoining to form a composite image for display with three-dimensional effects;
performing circular matching on the first and second image, wherein the circular matching comprises (a) determining a first pixel of the first image corresponding by a circular symmetric angle to a second pixel of the second image and (b) adjusting at least one of a color or intensity of at least one of the first or second pixel such that the colors or the intensities of the first and second pixels match; and
performing mixed blending on at least a portion of the composite image identified based on the circular matched portion of the composite image.

9. The method according to claim 8, wherein the first and second pixels corresponding by the circular symmetric angle are determined from 360°angles in the composite image.

10. The method according to claim 8 or 9, wherein the first and second pixels corresponding by the circular symmetric angle are determined based on at least a user input.

11. The method according to any of claims 8 to 10, wherein the first and second pixels corresponding by the circular symmetric angle are determined based on at least a camera attribute.

12. The method according to any of claims 8 to 11, wherein the first and second pixels corresponding by the circular symmetric angle are determined based on an analysis of the at least two images.

13. The method according to any of claims 8 to 12, further comprising:
performing circular matching and mixed blending on the second image and a third image by determining an additional set of pixels and adjusting at least one of a color or intensity of the additional set of pixels; and
refining the composite image by repeating the circular matching and the mixed blending on the first, second, and third images.

14. A computer program product comprising at least one non-transitory computer-readable storage medium having computer-executable program code instructions stored therein, the computer-executable program code instructions comprising program code instructions to:
receive an indication of at least a first and second image for adjoining to form a composite image for display with three-dimensional effects;
perform circular matching on the first and second image, wherein the circular matching comprises (a) determining a first pixel of the first image corresponding by a circular symmetric angle to a second pixel of the second image and (b) adjusting at least one of a color or intensity of at least one of the first or second pixel such that at least one of the colors or the intensities of the first and second pixels match; and
perform mixed blending on at least a portion of the composite image identified based on the circular matched portion of the composite image.

15. The computer program product as claimed in claim 14, wherein the computer-executable program code instructions further comprise instructions to perform a method according to any of claims 9 to 13.
